(19) Europäisches Patentamt

European Patent Office

Office européen des brevets

(11) **EP 1 417 807 B1**

(12) **EUROPEAN PATENT SPECIFICATION**

(45) Date of publication and mention
of the grant of the patent:
**12.04.2006 Bulletin 2006/15**

(51) Int Cl.:
*H04L 12/56* (2006.01)   *H04B 7/185* (2006.01)
*H04B 7/204* (2006.01)   *H04B 7/212* (2006.01)
*H04L 12/28* (2006.01)

(21) Application number: **02751359.7**

(22) Date of filing: **31.07.2002**

(86) International application number:
**PCT/GB2002/003525**

(87) International publication number:
**WO 2003/017589 (27.02.2003 Gazette 2003/09)**

(54) **BURST RESERVATION MULTIPLE ACCESS SCHEME WITH FREE AND ON DEMAND BANDWIDTH ASSIGNMENT**

BURSTRESERVIERUNGSCHEMA MIT VIELFACHZUGRIFF MIT FREIER UND AUF ANFRAGE BANDBREITEZUWEISUNG

MECANISME D'ACCES MULTIPLE A RESERVATION DE RAFALE AVEC ATTRIBUTION DE BANDE PASSANTE LIBRE ET A LA DEMANDE

(84) Designated Contracting States:
**DE FR GB**

(30) Priority: **16.08.2001 EP 01306979**

(43) Date of publication of application:
**12.05.2004 Bulletin 2004/20**

(73) Proprietor: **BRITISH TELECOMMUNICATIONS
public limited company
London EC1A 7AJ (GB)**

(72) Inventor: **MITCHELL, Paul Daniel
Halifax,
Yorkshire HX3 5QF (GB)**

(74) Representative: **Lidbetter, Timothy Guy Edwin
BT Group Legal
Intellectual Property Department
PP C5A
BT Centre
81 Newgate Street
London EC1A 7AJ (GB)**

(56) References cited:
EP-A- 1 037 405          WO-A- 99/16211
CA-A- 2 301 394

• **MOHAMMED J I AND LE-NGOC T: "Performance analysis of combined free/demand assignment multiple access (CFDAMA) protocol for packet satellite communications" COMMUNICATIONS, 1994. ICC '94, SUPERCOMM/ICC '94, CONFERENCE RECORD, 'SERVING HUMANITY THROUGH COMMUNICATIONS.' IEEE INTERNATIONAL CONFERENCE ON NEW ORLEANS, LA, USA 1-5 MAY 1994, NEW YORK, NY, USA,IEEE, 1 May 1994 (1994-05-01), pages 869-873, XP010126761 ISBN: 0-7803-1825-0**
• **ZHANG Z ET AL: "Bandwidth reservation for multimedia traffic over micro cellular network" 1997 IEEE 6TH. INTERNATIONAL CONFERENCE ON UNIVERSAL PERSONAL COMMUNICATIONS RECORD. SAN DIEGO, 12 - 16. OCT. 1997, IEEE INTERNATIONAL CONFERENCE ON UNIVERSAL PERSONAL COMMUNICATIONS, NEW YORK, IEEE, US, vol. 2 CONF. 6, 12 October 1997 (1997-10-12), pages 761-765, XP010248810 ISBN: 0-7803-3777-8**
• **HONGBING ZHANG ET AL: "A dynamic reservation protocol for multi-priority multi-rate data services on GSM networks" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8 June 1997 (1997-06-08), pages 1261-1265, XP010226958 ISBN: 0-7803-3925-8**

EP 1 417 807 B1

- TAAGHOL P ET AL: "Burst reservation multiple access techniques for the GSM/DCS and DECT systems" PERSONAL, INDOOR AND MOBILE RADIO COMMUNICATIONS, 1996. PIMRC'96., SEVENTH IEEE INTERNATIONAL SYMPOSIUM ON TAIPEI, TAIWAN 15-18 OCT. 1996, NEW YORK, NY, USA,IEEE, US, 15 October 1996 (1996-10-15), pages 412-416, XP010209203 ISBN: 0-7803-3692-5
- NAOR Z, LEVY H: "A centralized dynamic access probability protocol for next generation wireless network" PROCEEDINGS IEEE INFOCOM 2001. CONFERENCE ON COMPUTERS COMMUNICATIONS, vol. 2, 22 - 26 April 2001, pages 767-775, XP001061681 Anchorage
- BARRANTES-SLIESATIEVA E G ET AL: "SCHEDULING IN THIRD GENERATION WIRELESS NETWORKS" PROCEEDINGS OF THE SOUTHCON CONFERENCE. FORT LAUDERDALE, MAR. 7 - 9, 1995, NEW YORK, IEEE, US, 7 March 1995 (1995-03-07), pages 273-278, XP000531200 ISBN: 0-7803-2577-X
- KWOK Y-K ET AL: "Performance evaluation of multiple access control schemes for wireless multimedia services" IEE PROCEEDINGS: COMMUNICATIONS, INSTITUTION OF ELECTRICAL ENGINEERS, GB, vol. 148, no. 2, 17 April 2001 (2001-04-17), pages 86-94, XP006016600 ISSN: 1350-2425
- MITCHELL P D ET AL: "Bandwidth assignment scheme for ON-OFF type data traffic via satellite" ELECTRONICS LETTERS, IEE STEVENAGE, GB, vol. 37, no. 19, 13 September 2001 (2001-09-13), pages 1191-1193, XP006017249 ISSN: 0013-5194

**Description**

This invention relates to bandwidth assignment schemes for packet switching communications systems. In contrast to conventional circuit switched systems, in which an end-to-end link is maintained for the duration of a telephone call or the like, a packet switching system transmits information as a series of individual "packets" of data, each of which carries address data to allow it to be routed to its intended destination. The receiving terminal then reassembles the packets to retrieve the original message. Such arrangements make better use of the available bandwidth, but because of the variable delay in packet delivery are more suited to data than voice transmission.

The achievable delay and utilisation performance of the channels of a packet switching system are governed by the underlying bandwidth assignment scheme. Satellite Medium Access Control (MAC) protocols for data traffic have traditionally employed Demand Assigned Multiple Access (DAMA) with requests for bandwidth made on a regular basis, derived from the instantaneous queue levels at the ground terminals. Thus any terminal having more than a predetermined number of packets awaiting delivery makes regular requests for bandwidth. As bandwidth becomes available one such terminal is selected for transmission of its next packet. Such a systems is described, for example, by Mohamed and Le-Ngoc in a paper entitled "Performance Analysis of Combined/Free Demand Assigned Multiple Access (CFDAMA) Protocol for Packet Satellite Communications, (IEEE New Orleans, May 1994)

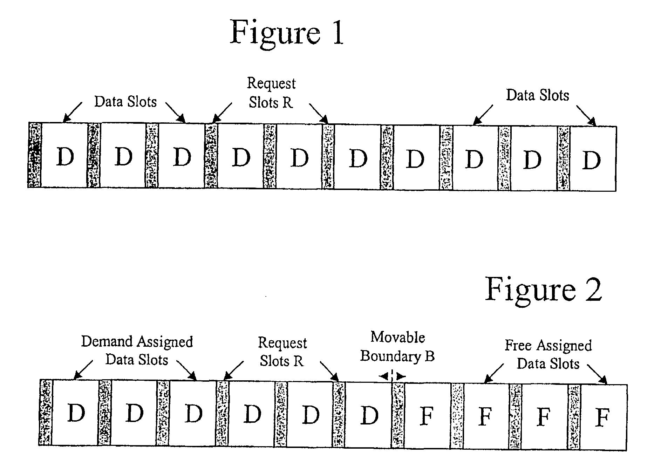

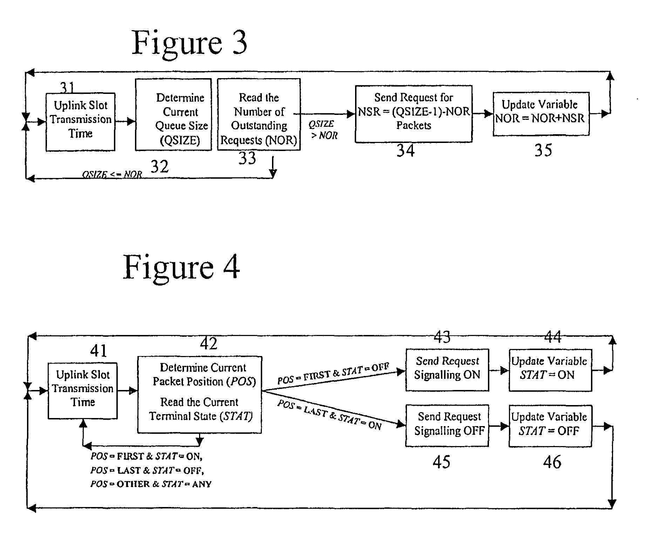

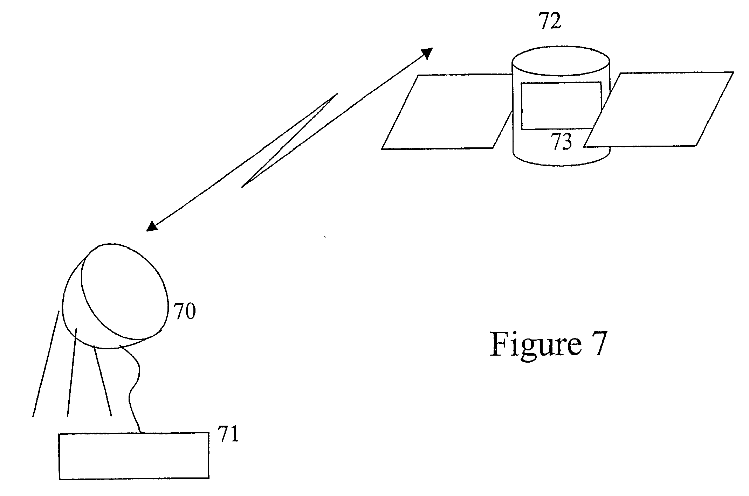

A typical satellite uplink frame format is shown in Figure 1, consisting of a series of data transmission slots D, F interleaved with DAMA request slots R. A request algorithm for such a scheme is given in Figure 3. Ground terminals 71 (see Figure 7) make requests for bandwidth accompanying their uplink packet transmissions in the adjacent request slots, as and when required. At the time a packet is to be transmitted in one of the slots D (step 31) the terminal 71 determines its current packet queue size (step 32) and the number of slots already requested which have not yet been satisfied (step 33). If the queue size is greater than the number of slots already requested (because further packets have been added to the queue since the previous packet was transmitted), it then transmits a request for further slots (step 34) based on the instantaneous ground terminal queue size and the number of outstanding slot requests (less the packet currently being transmitted). At the satellite 72, the scheduler 73 assigns slots on a frame-by-frame basis. In the first instance slots are demand-assigned to terminals based on requests queued at the scheduler in a first come first serve (FCFS) manner, with each terminal 71 being allocated a run of contiguous slots D based on the number of slots requested. In the absence of any queued requests, successive slots in the frame are allocated one-by-one on a free assigned round robin basis to all terminals in the system. To give terminals that have not requested bandwidth for a while a better chance of obtaining a free assigned slot, terminals are put to the bottom of the round-robin free assignment list subsequent to being allocated demand-assigned slots.

A geostationary satellite orbit is approximately 33,500km above the earth's surface. For most points on the earth's surface the nearest geostationary satellite is not at the zenith, so the distance is even greater - up to 40,000km. The resulting long propagation delay in geo-stationary earth orbit (GEO) satellite links inhibits the effectiveness of such schemes. A "hop", the propagation delay for transmission of a radio signal up to a satellite and back down to the ground, is about 0.25 seconds, but varies depending on the elevation angle to the satellite. The distance to the satellite is a minimum (about 0.24 seconds) when directly overhead an earth station at the equator, and it is a maximum (about 0.28 seconds) when an earth station is located at the edge of global coverage.. Since a request for bandwidth has to be transmitted to the scheduler and the reply returned before a packet can be transmitted (which has itself then to be transmitted up to the satellite and back), each packet is delayed by at least two satellite hops (in addition to any processing delay) if the scheduler is located on the satellite, or more if it is on the ground, or distributed. In order to circumvent the long delay, DAMA is often combined with either random access (e.g. Slotted ALOHA) or a form of free assignment of bandwidth as found in the Combined Free/Demand Assignment Multiple Access (CFDAMA) schemes discussed by Le-Ngoc et al, in "Performance of combined free/demand assignment multiple-access schemes in satellite communications", *International Journal of Satellite Communications, vol. 14, no. 1*, pp. 11-21, 1996. Leland et al, in "On the self-similar nature of Ethernet traffic (extended version)", *IEEE/ACM Transactions on Networking, vol. 2, no. 1, pp. 1-15, 1994.* show that modern computer Local Area Network (LAN) traffic exhibits a burstiness characteristic over a wide range of time scales.

The present invention presents a novel packet reservation system for data traffic, suited to handling long bursts of packets from ON-OFF type traffic sources.

According to the invention, there is provided a demand assignment process for a packet switching communications system in which a terminal requests capacity from a scheduler for the transmission of bursts of packets, characterised in that the terminal transmits position signals to the scheduler with one or more of the packets, the position signals being indicative of those packets' positions in a burst. The position signals may be used by the scheduler to , identify which terminals have transmitted part of a burst but have further packets of that burst awaiting transmission, and prioritises the allocation of capacity to those terminals to allow transmission of further packets of the partly transmitted burst. This system differs from prior art arrangements in that each terminal provides an indication of how the packets in its queue are arranged in bursts, allowing priority to be given to transmission of packets to complete a burst that has already been partially transmiited. The packets awaiting transmission that make up subsequent bursts are therefore given less significance in the allocation process.

In one embodiment the terminal transmits a final position signal with at least the last packet in each burst, thereby indicating the transition of the terminal from a mid-burst ("ON") state to a non-burst ("OFF") state and causing a flag in the scheduler to indicate the transition to the "OFF" state for the terminal in question. The transition in the reverse direction, from "OFF" to "ON" state may simply be indicated by the arrival of a packet from a terminal currently in the "OFF" state, or may be triggered by an initial position signal transmitted with the first packet in each burst. Although in the described embodiment a simple "ON/OFF" signal with the first and last packets of each burst is used, other arrangements may be envisaged. For example an initial position signal may be used to indicate the length of the burst. As well as dispensing with the need for the final position signal, this arrangement allows the scheduler to allocate slots to a frame taking into account the expected demand for slots in one or more further frames as indicated by the requests for capacity, allowing capacity to be at least provisionally allocated several frames ahead. The use of position markers may also be used to allow a single request for capacity to be made for each burst, that request being maintained for as many frames as necessary to transmit the complete burst, without the need to repeat the request for each frame. The scheduler can thus allocate slots to one or more frames taking into account the expected demand for slots in such frames indicated by the requests for capacity.

Preferably the scheduler identifies, from the position signals transmitted by the terminals, whether any terminals are not part way through transmission of a burst, (that is to say, they have completed one burst and have not started another), and if there are any such terminals, the scheduler allocates capacity to allow those terminals to request transmission of new bursts should they require to do so. The proportions of the capacity allocated to allow such terminals to request capacity, and the capacity allocated to terminals already part way through a burst, may be varied according to the current number of terminals currently in each of those conditions.

The invention also extends to a terminal for a packet switching system comprising means for requesting capacity from a scheduler for the transmission of bursts of packets, characterised by means for transmitting position signals to the scheduler with at least some of the packets, indicative of those packets' positions in a burst. The terminal may have means for transmitting a final position signal with at least the last packet in each burst, or for transmitting an initial position signal with at least the first packet in each burst, which may include an indication of the length of the burst.

The invention also extends to a scheduler for a packet switching system comprising allocation means for allocating capacity to a plurality of terminals for the transmission of bursts of packets, characterised by means for receiving position signals from the terminals with at least some of the packets, indicative of those packets' positions in a burst. The scheduler may comprise means for identifying, from the position signals received from the terminals, which terminals have transmitted part of a burst but have further packets of that burst awaiting transmission, wherein the allocation means is arranged to allocate capacity to those terminals to allow transmission of further packets of the burst. It may also comprise means for setting a flag to a first indication in respect of a terminal when the first packet of a burst is received from that terminal, and resetting the flag to a second indication when the last packet in the burst is received.

The scheduler may include means for identifying, from the position signals transmitted by the terminals, which terminals have transmitted part of a burst, but still have further packets of that burst awaiting transmission, the allocation means having means to prioritise the allocation of capacity to such terminals to allow transmission of the partly transmitted bursts. The scheduler may have means for detecting an initial position signal indicating the length of a burst, and means for allocating capacity in a plurality of frames for the transmission of the said burst. It may be operable, in response to a single request from a terminal for capacity to transmit a burst, to continuously allocate capacity to the burst in each of a plurality of frames until the complete burst has been transmitted

The scheduler may also have means for identifying, from the position signals transmitted by the terminals, whether any of the terminals are not part way through transmission of a burst, and allocation means for allocating capacity to allow such terminals to request transmission of new bursts. The allocation means is preferably arranged to vary the proportions of the capacity allocated to terminals not part way through a burst, and the capacity allocated to terminals already part way through a burst, according to the current number of terminals in each of those conditions..

An embodiment of the invention will now be described, with reference to the drawings, in which

Figure 1 shows a frame format used in the conventional system
Figure 2 shows a frame format suitable for use in the invention
Figure 3 shows a request algorithm for use in the conventional prior art arrangement already discussed
Figure 4 shows a request algorithm for use in the system according to the invention
Figures 5 and 6 show the results of comparative tests between a system according to the invention and a conventional system
Figure 7 shows schematically the elements co-operating to perform the invention.

Referring firstly to Figure 7, each satellite ground station 70 is associated with one or more terminals 71 which operate to transmit packet data to the satellite 72, which relays them to other ground stations (not shown). The allocation of slots in the packet frame is controlled by a sequencer 73 located in the satellite 72.

The allocation scheme according to the invention has a frame format as shown in Figure 2, which is similar to the conventional arrangement shown in Figure 1 in that it consists of a series of data transmission slots D, F interleaved with DAMA request slots R. The request algorithm is given in figure 3. As in the conventional system, ground terminals 70 transmit requests for bandwidth with their uplink packet transmissions, using the adjacent request slots R as and when required.

As has been stated, in the prior art arrangement the ground terminals 71 each request a number of slots D based on the instantaneous ground terminal total queue size (irrespective of whether they form part of one burst or several), and the number of outstanding slot requests. With the request strategy according to the present invention, as shown in Figure 4, requests take the form of bandwidth signalling on a burst-by-burst basis. Terminals 71 are flagged in the scheduler 73 as existing in one of two states, ON or OFF. When a packet in a burst is transmitted on the uplink (step 41) the terminal 71 determines whether the packet is the first in a burst, the last in the burst, or an intermediate packet (step 42).

In this embodiment the terminal 71 labels the first and/or last packets in order to indicate their position in the burst to the scheduler 73. The first packet of a burst may carry a label not only indicating to the sheduler 73 that it is the first packet, but also indicating the length of the burst. In this case the scheduler 73 need only count the packets to identify the last one in the burst, and thus can re-set the terminal status without a further specific signal being transmitted. However,this arrangement is only possible if the lengtrh of the burst is already known to the terminal, so it is not possible to use this technique if unless the entire burst is already in the queue at the terminal 71. Alternatvely, the last packet of each burst may be labelled, allowing the scheduler to then recognise the next packet to arive from the same terminal as being the first packet of the next burst.

When the scheduler 73 identifies a packet as the first of a burst, it changes the setting for the originating terminal to the ON state (step 43), and sets its status flag to ON (step 44). When the last packet of each burst is transmitted, the scheduler 73 changes the status of the relevant terminal 71 back to the OFF state (step 45) and returns its status flag to OFF (step 46).

The scheduler 73 in the satellite 72 maintains two lists: one containing the terminals that have signalled ON and one containing the terminals that have signalled OFF. Each frame consists of a variable number of free assigned slots determined by:

$$Number\ of\ free\ slots \quad = \quad \left[\frac{N_{OFF}}{N_{TOT}}\right] * S_{TOT} * FREE_{MAX} \qquad N_{OFF} < N_{TOT}$$

$$= \quad S_{TOT} \qquad\qquad\qquad\qquad N_{OFF} = N_{TOT}$$

$$Number\ of\ demand\ slots \quad = \quad S_{TOT} - Number\ of\ free\ slots$$

Where,

$N_{OFF}$ =  Number of terminals in the OFF state

$N_{TOT}$ =  Total number of terminals

$S_{TOT}$ =  Total number of slots in the frame

$FREE_{MAX}$ =  Maximum proportion of free slots

Thus, provided that at least one terminal is in the "ON" state, a proportion of the slots (at least 1 - $FREE_{MAX}$) are demand-assigned. The value of $FREE_{MAX}$ is set such that when demand is low (but non-zero) demand-assigned slots are not delayed by an excessive number of free-assigned slots. This proportion increases as the number of terminals in the "ON" state increases. Similarly, provided that at least one terminal is in the "OFF" state, the number of free slots is non-zero.

The scheduler then allocates bandwidth to each terminal on a frame-by-frame basis, with the demand-assigned and free-assigned slots allocated to the ON and OFF terminals respectively. Unlike the process of Figure 3, there is no need to request capacity based on queue size. The number of available demand-assigned slots D and free-assigned slots F changes dynamically to suit the instantaneous requirements, by changing the position of the boundary B shown in Figure 2. When all the nodes are OFF, the entire frame is free-assigned to minimise the signalling delay for terminals following the start of a burst.

If the labelling of the packets includes an indication of burst length, the scheduler 73 can be arranged to distribute the demand-assigned slots between the bursts currently in progress in accordance with burst size. This may be done in several different ways, for example in order to weight the allocation in favour of the larger bursts so that subsequent bursts from the same terminal are not delayed unduly, or to give preference to any bursts which can be completed in the current frame, thereby releasing capacity for other bursts from the same or other terminals 71.

It should be noted that it is burst size, and not queue size, which determines the allocation of capacity in these embodiments. The size of a queue is constantly changing, requiring much more frequent signalling from the terminal 71 to the scheduler 73 than is the case when burst size is the determining factor. However, the size of an individual burst is fixed. With conventional DAMA schemes for data, traffic requests have to be made for transmission of each packet in the queue, resulting in delays whilst such requests are processed. In a satellite system such delays can be significant because of the distance of the satellite from the terminals. In the present invention, delays are minimised because once a terminal has signalled ON, slots are continually provided without the need for repeated requests. In effect, the connectionless packet bursts are treated like a individual connection-oriented (circuit-switched) applications by providing a continual supply of capacity to a terminal for as long as necessary to transmit an individual burst. The minimum delay for each slots is reduced to one satellite hop instead of two, since no further requests for capacity have to be made whilst the status is set at ON.

The invention provides terminals with access rights to the demand assigned bandwidth, which is shared equally between them. The maximum channel throughput is dependent on the number of terminals currently being supported with no hard limit on the number of terminals that can be supported, simply a gradual reduction in the bandwidth available to each terminal.

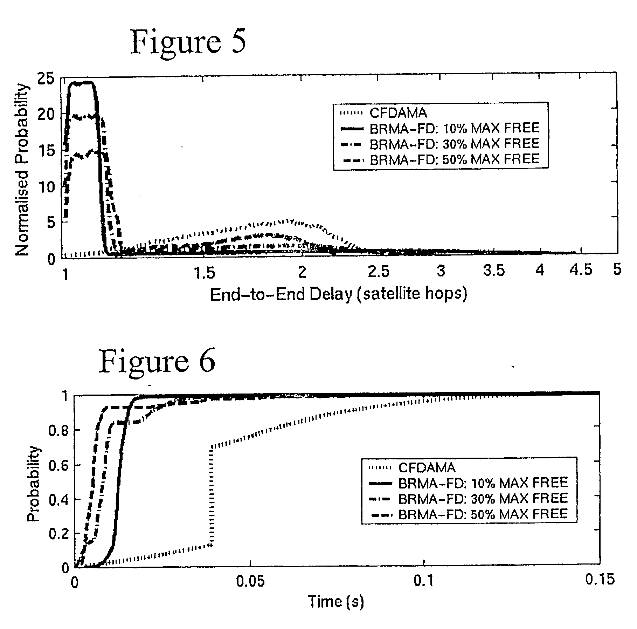

The conventional system and a scheme according to the present invention have been simulated for a star based satellite network consisting of a number of terminals communicating with a hub station via a GEO satellite with on-board scheduler. The results are shown in Figures 5 and 6

Figure 5 shows the distribution of end-to-end delay values of packets with the the conventional (CFDAMA) scheme at 70% channel load and the scheme according to the invention (BRMA-FD) at various channel loads. These results show that a large majority of packets are received within a very narrow range of end-to-end delay times with the scheme according to the invention, indicative that the bandwidth is successfully targeted to terminals that require it. As the proportion of demand assigned slots is increased, more bandwidth is targeted to terminals within bursts resulting in a larger percentage of packets experiencing low end-to-end delay values. The maximum end-to-end delay increases, however, as terminals have to wait longer before they can signal ON at the start of a burst. With a maximum proportion of 30% free assigned slots, 64% of packets are transmitted with an end-to-end delay of less than 1.2 satellite hops with a maximum end-to-end delay of 2.7 satellite hops. The distribution of end-to-end delay values is more evenly spread with the prior art arrangement, ranging from 1 to 2.5 satellite hops.

Figure 6 shows the cumulative distribution function of the end-to-end delay difference between consecutive packets within bursts. It can be seen that at the same channel loading (70%), the difference in end-to-end delay values is extremely low for the scheme according to the invention, with 80% of consecutive packets experiencing less than 0.01s delay variation compared with only 70% experiencing less than 0.04s delay variation with the conventional scheme.

## Claims

1. A demand assignment process for a packet switching communications system in which a terminal (71) requests capacity (R) from a scheduler (73) for the transmission of bursts of packets, **characterised in that** the terminal transmits position signals to the scheduler with one or more of the packets (D), the position signals being indicative of those packets' positions in a burst.

2. A demand assignment process according to claim 1 wherein the terminal (71) transmits a final position signal with at least the last packet in each burst.

3. A demand assignment process according to claim 1 or 2 wherein the terminal (71) transmits an initial position signal with at least the first packet in each burst.

4. A demand assignment process according to claim 3, wherein the initial position signal includes an indication of the length of the burst.

**5.** A demand assignment process according to claim 1, claim 2 or claim 4 wherein the scheduler (73), using the position signals transmitted by the terminals (71), identifies which terminals have transmitted part of a burst but have further packets of that burst awaiting transmission, and prioritises the allocation of capacity to those terminals to allow transmission of further packets of the partly transmitted burst.

**6.** A demand assignment process according to claim 5 wherein the scheduler (73) identifies, from the position signals transmitted by the terminals (71), whether any of the terminals are not part way through transmission of a burst, and allocates capacity to allow such terminals to request transmission of new bursts.

**7.** A demand assignment process according to claim 6 wherein the proportions of the capacity (F) allocated to terminals not part way through a burst, and the capacity (D) allocated to terminals already part way through a burst, are varied according to the current number of terminals in each of those conditions

**8.** A demand assignment process according to claim 4, wherein the terminal (71) generates a single request for capacity for a complete burst, and the scheduler (73) allocates slots to one or more frames taking into account the expected demand for slots in such frames indicated by the requests for capacity.

**9.** A demand assignment process according to claim 3 or 4, wherein the terminal (71) generates a single initial request for capacity for a complete burst, and the scheduler (73) allocates capacity to the terminal in each frame, in response to the initial request, until the complete burst has been transmitted

**10.** A terminal (71) for a packet switching system comprising means for requesting capacity from a scheduler (73) for the transmission of bursts of packets, **characterised by** means for transmitting position signals to the scheduler with at least some of the packets, indicative of those packets' positions in a burst.

**11.** A terminal according to claim 10 wherein the terminal (71) has means for transmitting a final position signal with at least the last packet in each burst.

**12.** A terminal according to claim 10 or 11 wherein the terminal (71) has means for transmitting an initial position signal with at least the first packet in each burst

**13.** A terminal according to claim 12, wherein the initial position signal includes an indication of the length of the burst.

**14.** A scheduler (73) for a packet switching system comprising allocation means for allocating capacity to a plurality of terminals (71) for the transmission of bursts of packets, **characterised by** means for receiving position signals from the terminals with at least some of the packets, indicative of those packets' positions in a burst.

**15.** A scheduler (73) according to claim 14, comprising means for identifying, from the position signals received from the terminals, which terminals (71) have transmitted part of a burst but have further packets of that burst awaiting transmission, wherein the allocation means is arranged to allocate capacity (D) to those terminals to allow transmission of further packets of the burst.

**16.** A scheduler according to claim 15, comprising means for setting a flag to a first indication (43) in respect of a terminal when the first packet of a burst is received from that terminal, and resetting the flag to a second indication (45) when the last packet in the burst is received.

**17.** A scheduler (73) according to claim 14, claim 15 or claim 16 having means for identifying, from the position signals transmitted by the terminals, which terminals have transmitted part of a burst, but have further packets of that burst awaiting transmission, the allocation means having means to prioritise the allocation of capacity (D) to such terminals to allow transmission of further packets of the partly transmitted bursts.

**18.** A scheduler (73) according to claim 14, having means for detecting an initial position signal indicating the length of a burst, and means for allocating capacity (D) in a plurality of frames for the transmission of the said burst

**19.** A scheduler (73) according to claim 14, having means operable, in response to a single request from a terminal for capacity to transmit a burst, to continuously allocate capacity (D) to the burst in each of a plurality of frames until the complete burst has been transmitted

**20.** A scheduler (73) according to claim 17, 18 or 19 having means for identifying, from the position signals transmitted by the terminals (71), whether any of the terminals are not part way through transmission of a burst, and allocation means for allocating capacity (F) to allow such terminals to request transmission of new bursts.

**21.** A scheduler (73) according to claim 18, wherein the allocation means is arranged to vary the proportions of the capacity (F) allocated to terminals not part way through a burst, and the capacity (D) allocated to terminals already part way through a burst, according to the current number of terminals in each of those conditions.

**Patentansprüche**

**1.** Bedarfszuordnungsprozess für ein Paketvermittlungs-Kommunikationssystem, in dem ein Endgerät (71) Kapazität (R) für die Übertragung von Datenblöcken aus Paketen von einer Ablaufsteuerung (73) anfordert, **dadurch gekennzeichnet, dass** das Endgerät zusammen mit einem oder mehreren der Pakete (D) Positionssignale zu der Ablaufsteuerung sendet, die die Positionen jener Pakete in einem Datenblock angeben.

**2.** Bedarfszuordnungsprozess nach Anspruch 1, bei dem das Endgerät (71) ein letztes Positionssignal zumindest zusammen mit dem letzten Paket in jedem Datenblock sendet.

**3.** Bedarfszuordnungsprozess nach Anspruch 1 oder 2, bei dem das Endgerät (71) ein erstes Positionssignal zumindest zusammen mit dem ersten Paket in jedem Datenblock sendet.

**4.** Bedarfszuordnungsprozess nach Anspruch 3, bei dem das erste Positionssignal eine Angabe der Länge des Datenblocks enthält.

**5.** Bedarfszuordnungsprozess nach Anspruch 1, Anspruch 2 oder Anspruch 4, bei dem die Ablaufsteuerung (73) unter Verwendung der von den Endgeräten (71) gesendeten Positionssignale jene Endgeräte identifiziert, die einen Teil eines Datenblocks gesendet haben, die jedoch weitere Pakete dieses Datenblocks besitzen, die auf die Übertragung warten, und die Zuweisung von Kapazität an jene Endgeräte mit Priorität versieht, um die Übertragung weiterer Pakete des teilweise gesendeten Datenblocks zuzulassen.

**6.** Bedarfszuordnungsprozess nach Anspruch 5, bei dem die Ablaufsteuerung (73) anhand der von den Endgeräten (71) gesendeten Positionssignale feststellt, ob irgendwelche der Endgeräte nicht gerade einen Datenblock übertragen, und Kapazität zuweist, um solchen Endgeräten zu erlauben, die Übertragung neuer Datenblöcke anzufordern.

**7.** Bedarfszuordnungsprozess nach Anspruch 6, bei dem die Anteile der Kapazität (F), die Endgeräten zugewiesen ist, die nicht gerade einen Datenblock übertragen, und der Kapazität (D), die Endgeräten zugewiesen ist, die bereits gerade einen Datenblock übertragen, entsprechend der momentanen Anzahl von Endgeräten in jedem dieser Zustände geändert werden.

**8.** Bedarfszuordnungsprozess nach Anspruch 4, bei dem das Endgerät (71) eine einzige Kapazitätsanforderung für einen vollständigen Datenblock erzeugt und die Ablaufsteuerung (73) einem oder mehreren Rahmen Zeitschlitze unter Berücksichtigung des erwarteten Bedarfs an Zeitschlitzen in solchen Rahmen, der durch die Kapazitätsanforderungen angegeben wird, zuweist.

**9.** Bedarfszuordnungsprozess nach Anspruch 3 oder 4, bei dem das Endgerät (71) eine einzige erste Kapazitätsanforderung für einen vollständigen Datenblock erzeugt und die Ablaufsteuerung (73) in Reaktion auf diese erste Anforderung dem Endgerät in jedem Rahmen Kapazität zuweist, bis der vollständige Datenblock übertragen worden ist.

**10.** Endgerät (71) für ein Paketvermittlungssystem, das Mittel zum Anfordern von Kapazität für die Übertragung von Datenblöcken aus Paketen von einer Ablaufsteuerung (73) umfasst, **gekennzeichnet durch** Mittel, die zusammen mit wenigstens einigen der Pakete Positionssignale zu der Ablaufsteuerung senden, die die Positionen jener Pakete in einem Datenblock angeben.

**11.** Endgerät nach Anspruch 10, wobei das Endgerät (71) Mittel zum Senden eines letzten Positionssignals zumindest zusammen mit dem letzten Paket in jedem Datenblock aufweist.

**12.** Endgerät nach Anspruch 10 oder 11, wobei das Endgerät (71) Mittel zum Senden eines ersten Positionssignals zumindest zusammen mit dem ersten Paket in jedem Datenblock aufweist.

**13.** Endgerät nach Anspruch 12, bei dem das erste Positionssignal eine Angabe der Länge des Datenblocks enthält.

**14.** Ablaufsteuerung (73) für ein Paketvermittlungssystem, die Zuweisungsmittel zum Zuweisen von Kapazität für die Übertragung von Datenblöcken aus Paketen an mehrere Endgeräte (71) umfasst, **gekennzeichnet durch** Mittel, die Positionssignale zumindest zusammen mit einigen der Pakete von den Endgeräten empfangen, wobei die Positionssignale die Positionen jener Pakete in einem Datenblock angeben.

**15.** Ablaufsteuerung (73) nach Anspruch 14, die Mittel umfasst, die anhand der von den Endgeräten empfangenen Positionssignale jene Endgeräte (71) identifizieren, die einen Teil eines Datenblocks gesendet haben, jedoch weitere Pakete dieses Datenblocks besitzen, die auf die Übertragung warten, wobei die Zuweisungsmittel so beschaffen sind, dass sie jenen Endgeräten Kapazität (D) zuweisen, um die Übertragung weiterer Pakete des Datenblocks zuzulassen.

**16.** Ablaufsteuerung nach Anspruch 15, die Mittel umfasst, um einen Merker auf eine erste Angabe (43) in Bezug auf ein Endgerät zu setzen, wenn das erste Paket eines Datenblocks von diesem Endgerät empfangen wird, und um den Merker auf eine zweite Angabe (45) zurückzusetzen, wenn das letzte Paket in dem Datenblock empfangen wird.

**17.** Ablaufsteuerung (73) nach Anspruch 14, Anspruch 15 oder Anspruch 16, die Mittel umfasst, um anhand der von den Endgeräten gesendeten Positionssignale festzustellen, welche Endgeräte einen Teil eines Datenblocks gesendet haben, jedoch weitere Pakete dieses Datenblocks besitzen, die auf die Übertragung warten, wobei die Zuweisungsmittel Mittel besitzen, um die Zuweisung von Kapazität (D) an solche Endgeräte mit Priorität zu versehen, um die Übertragung weiterer Pakete der teilweise übertragenen Datenblöcke zuzulassen.

**18.** Ablaufsteuerung (73) nach Anspruch 14, die Mittel zum Erfassen eines ersten Positionssignals, das die Länge eines Datenblocks angibt, und Mittel zum Zuweisen von Kapazität (D) in mehreren Rahmen für die Übertragung des Datenblocks aufweist.

**19.** Ablaufsteuerung (73) nach Anspruch 14, die Mittel aufweist, die in Reaktion auf eine einzige Anforderung von Kapazität für die Übertragung eines Datenblocks von einem Endgerät so betreibbar sind, dass sie dem Datenblock in jedem von mehreren Rahmen ununterbrochen Kapazität (D) zuweisen, bis der vollständige Datenblock übertragen worden ist.

**20.** Ablaufsteuerung (73) nach Anspruch 17, 18 oder 19, die Mittel, die anhand der von den Endgeräten (71) gesendeten Positionssignale feststellen, ob irgendwelche der Endgeräte nicht gerade einen Datenblock übertragen, und Zuweisungsmittel, die Kapazität (F) zuweisen, um solchen Endgeräten zu erlauben, die Übertragung neuer Datenblöcke anzufordern, umfasst.

**21.** Ablaufsteuerung (73) nach Anspruch 18, bei der die Zuweisungsmittel so beschaffen sind, dass sie die Anteile der Kapazität (F), die Endgeräten zugewiesen ist, die nicht gerade einen Datenblock übertragen, und der Kapazität (D), die Endgeräten zugewiesen ist, die bereits gerade einen Datenblock übertragen, entsprechend der momentanen Anzahl von Endgeräten in jedem dieser Zustände verändern.

## Revendications

**1.** Procédé d'affectation à la demande pour un système de communication à commutation de paquets dans lequel un terminal (71) demande de la capacité (R) à un planificateur (73) en vue de la transmission de salves de paquets, **caractérisé en ce que** le terminal transmet des signaux de position au planificateur avec un ou plusieurs des paquets (D), les signaux de position étant indicatifs des positions de ces paquets dans une salve.

**2.** Procédé d'affectation à la demande selon la revendication 1, dans lequel le terminal (71) transmet un signal de position final avec au moins le dernier paquet dans chaque salve.

**3.** Procédé d'affectation à la demande selon la revendication 1 ou 2, dans lequel le terminal (71) transmet un signal de position initial avec au moins le premier paquet dans chaque salve.

**4.** Procédé d'affectation à la demande selon la revendication 3, dans lequel le signal de position initial comprend une indication de la longueur de la salve.

**5.** Procédé d'affectation à la demande selon la revendication 1, la revendication 2 ou la revendication 4, dans lequel le planificateur (73), en utilisant les signaux de position transmis par les terminaux (71), identifie les terminaux qui ont transmis une partie d'une salve mais qui ont d'autres paquets de cette salve qui attendent une transmission, et affecte une priorité à l'allocation de capacité à ces terminaux pour permettre la transmission d'autres paquets de la salve partiellement transmise.

**6.** Procédé d'affectation à la demande selon la revendication 5, dans lequel le planificateur (73) identifie, à partir des signaux de position transmis par les terminaux (71), si l'un quelconque des terminaux n'est pas en cours de transmission d'une salve et alloue de la capacité pour permettre à de tels terminaux de demander la transmission de nouvelles salves.

**7.** Procédé d'affectation à la demande selon la revendication 6, dans lequel les proportions de la capacité (F) allouée à des terminaux qui ne sont pas en cours de transmission d'une salve, et la capacité (D) allouée à des terminaux qui sont déjà en cours de transmission d'une salve, sont modifiées conformément au nombre actuel de terminaux dans chacune de ces situations.

**8.** Procédé d'affectation à la demande selon la revendication 4, dans lequel le terminal (71) engendre une seule demande de capacité pour une salve complète, et le planificateur (73) alloue des tranches à une ou plusieurs trames en prenant en compte la demande attendue pour des tranches dans de telles trames indiquées par les demandes de capacité.

**9.** Procédé d'affectation à la demande selon la revendication 3 ou 4, dans lequel le terminal (71) engendre une seule demande initiale de capacité pour une salve complète, et le planificateur (73) alloue de la capacité au terminal dans chaque trame, en réponse à la demande initiale, jusqu'à ce que la salve complète ait été transmise.

**10.** Terminal (71) pour un système à commutation de paquets comprenant un moyen destiné à demander de la capacité à un planificateur (73) pour la transmission de salves de paquets, **caractérisé par** un moyen destiné à transmettre des signaux de position au planificateur avec au moins certains des paquets, indicatif des positions de ces paquets dans une salve.

**11.** Terminal selon la revendication 10, dans lequel le terminal (71) comporte un moyen destiné à transmettre un signal de position final avec au moins le dernier paquet dans chaque salve.

**12.** Terminal selon la revendication 10 ou 11, dans lequel le terminal (71) comporte un moyen destiné à transmettre un signal de position initial avec au moins le premier paquet dans chaque salve.

**13.** Terminal selon la revendication 12, dans lequel le signal de position initial comprend une indication de la longueur de la salve.

**14.** Planificateur (73) destiné à un système à commutation de paquets comprenant un moyen d'allocation destiné à allouer de la capacité à une pluralité de terminaux (71) en vue de la transmission de salves de paquets, **caractérisé par** un moyen destiné à recevoir des signaux de position des terminaux avec au moins certains des paquets, indicatifs des positions de ces paquets dans une salve.

**15.** Planificateur (73) selon la revendication 14, comprenant un moyen destiné à identifier, à partir des signaux de position reçus depuis les terminaux, quels terminaux (71) ont transmis une partie d'une salve mais comportent d'autres paquets de cette salve en attente d'une transmission, où le moyen d'allocation est agencé pour allouer de la capacité (D) à ces terminaux pour permettre une transmission d'autres paquets de la salve.

**16.** Planificateur selon la revendication 15, comprenant le moyen destiné à armer un indicateur selon une première indication (43) pour ce qui concerne un terminal lorsque le premier paquet d'une salve est reçu de ce terminal, et à réinitialiser l'indicateur selon une seconde indication (45) lorsque le dernier paquet de la salve est reçu.

**17.** Planificateur (73) selon la revendication 14, la revendication 15 ou la revendication 16, comportant un moyen d'identifier, à partir des signaux de position transmis par les terminaux, quels terminaux ont transmis une partie d'une salve, mais ont encore d'autres paquets de cette salve attendant d'être transmis, le moyen d'allocation comportant un moyen pour affecter une priorité à l'allocation de capacité (D) à de tels terminaux pour permettre la transmission d'autres paquets des salves partiellement transmises.

18. Planificateur (73) selon la revendication 14, comportant un moyen destiné à détecter un signal de position initial, indiquant la longueur d'une salve, et un moyen destiné à allouer de la capacité (D) dans une pluralité de trames en vue de la transmission de ladite salve.

19. Planificateur (73) selon la revendication 14, comportant un moyen pouvant être mis en oeuvre, en réponse à une demande unique provenant d'un terminal pour de la capacité en vue de transmettre une salve, pour allouer de manière continue de la capacité (D) à la salve dans chacune d'une pluralité de trames, jusqu'à ce que la salve complète ait été transmise.

20. Planificateur (73) selon la revendication 17, 18 ou 19 comportant un moyen destiné à identifier, à partir des signaux de position transmis par les terminaux (71) si l'un quelconque des terminaux n'est pas en cours de transmission d'une salve, et un moyen d'allocation pour allouer de la capacité (F) pour permettre à de tels terminaux de demander la transmission de nouvelles salves.

21. Planificateur (73) selon la revendication 18, dans lequel le moyen d'allocation est agencé pour faire varier les proportions de la capacité (F) allouée à des terminaux qui ne sont pas en cours de transmission d'une salve, et la capacité (D) allouée à des terminaux déjà en cours de transmission d'une salve, conformément au nombre actuel de terminaux dans chacune de ces situations.

EP 1 417 807 B1

# Figure 1

Data Slots · Request Slots R · Data Slots

D D D D D D D D D D

# Figure 2

Demand Assigned Data Slots · Request Slots R · Movable Boundary B · Free Assigned Data Slots

D D D D D D F F F F

# Figure 3

| 31 | | | | |
|---|---|---|---|---|
| Uplink Slot Transmission Time | Determine Current Queue Size (QSIZE) | Read the Number of Outstanding Requests (NOR) | Send Request for NSR = (QSIZE-1)-NOR Packets | Update Variable NOR = NOR+NSR |

*QSIZE > NOR*

*QSIZE <= NOR* 32    33    34    35

# Figure 4

| 41 | 42 | 43 | 44 |
|---|---|---|---|
| Uplink Slot Transmission Time | Determine Current Packet Position (*POS*) Read the Current Terminal State (*STAT*) | Send Request Signalling ON | Update Variable *STAT* = ON |
| | | Send Request Signalling OFF | Update Variable *STAT* = OFF |

*POS = FIRST & STAT = OFF*

*POS = LAST & STAT = ON*

*POS = FIRST & STAT = ON,*
*POS = LAST & STAT = OFF,*
*POS = OTHER & STAT = ANY*

45    46

EP 1 417 807 B1

## Figure 5

## Figure 6

EP 1 417 807 B1

72

73

70

71

Figure 7